(19) Europäisches Patentamt
European Patent Office
Office européen des brevets

(11) **EP 2 669 161 B1**

(12) **EUROPEAN PATENT SPECIFICATION**

(45) Date of publication and mention
of the grant of the patent:
**06.04.2016 Bulletin 2016/14**

(51) Int Cl.:
*B62J 6/02* *(2006.01)*       *B62K 11/06* *(2006.01)*
*B60Q 1/115* *(2006.01)*     *B60Q 1/18* *(2006.01)*
*B60Q 1/12* *(2006.01)*      *B62J 17/02* *(2006.01)*
*B62J 29/00* *(2006.01)*

(21) Application number: **13169473.9**

(22) Date of filing: **28.05.2013**

(54) **Vehicle that leans into turns with sub headlight unit**

Sich in Kurven lehnendes Fahrzeug mit Unterscheinwerfereinheit

Véhicule qui s'incline dans les virages avec module de phare secondaire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2012 JP 2012125268**

(43) Date of publication of application:
**04.12.2013 Bulletin 2013/49**

(73) Proprietor: **Yamaha Hatsudoki Kabushiki Kaisha
Iwata-shi, Shizuoka 438-8501 (JP)**

(72) Inventor: **Inoue, Takehiro
Iwata-shi, Shizuoka 438-8501 (JP)**

(74) Representative: **Grünecker Patent- und
Rechtsanwälte
PartG mbB
Leopoldstraße 4
80802 München (DE)**

(56) References cited:
**EP-A1- 1 473 215      EP-A1- 2 213 511
EP-A2- 2 641 778      CN-A- 1 769 127
FR-A1- 2 844 759**

**Description**

The present invention relates to a vehicle that leans into turns according to the preamble of independent claim 1 as well as to a method for controlling a sub headlight unit for use in a vehicle that leans into turns. Such a sub headlight unit can be taken from the prior art document CN-A-1769127 which refers to a vehicle that leans into turns, wherein sub headlight units are provided which would be turned on and controlled in consideration of the lean angle of the vehicle. The sub headlights are below the main headlight.

In general, in a vehicle that leans into turns (such as saddle-ride type vehicles including motorcycles, three-wheeled motor vehicles, snowmobiles, and ATVs (all terrain vehicles)), when the vehicle corners or turns at an intersection, a rider operates a handlebar and additionally shifts his/her own weight in order to counteract centrifugal force acting on a vehicle body. Thereby, the vehicle turns with an attitude (hereinafter, also referred to as "lean attitude") leaning to the inner side of a curve. On the other hand, in a vehicle that does not lean into turns, for example, in an automobile, when the vehicle corners or turns at an intersection, a driver operates a steering wheel and turns with centrifugal force acting on a vehicle body. Therefore, in the vehicle that does not lean into turns, the vehicle body leans to the outer side of a curve due to the centrifugal force.

In the vehicle that leans into turns, the turning is made with an active use of the weight shifting of the rider himself/herself. Therefore, the vehicle body largely leans. In the vehicle that does not lean into turns, the vehicle body leans to the outer side of the curve due to the centrifugal force. The degree of this leaning varies depending on the running speed of the vehicle and the magnitude (radius) of the curve, and this leaning of the vehicle body is not utilized for the turning. In the vehicle that does not lean into turns, it is preferable that the amount of leaning to the outer side of the curve due to the centrifugal force is small.

Thus, at a time of cornering or turning at an intersection, the vehicle that leans into turns causes the vehicle body to lean to the inner side of the curve with a relatively large amount of leaning, while the vehicle that does not lean into turns causes the vehicle body to lean to the outer side of the curve with a relatively small amount of leaning.

Normally, a vehicle is provided with a plurality of lights irrespective of whether or not the vehicle leans into turns. The lights include a light intended mainly to ensure a field of view of a rider of the vehicle and a light intended mainly to enable a surrounding vehicle or the like to recognize the presence of the own vehicle. A headlight is the light intended mainly to ensure the field of view of the rider of the vehicle, and in general, is configured to switch between a high beam (running headlight) and a low beam (passing headlight).

The high beam, which emits light in a horizontal (upward) direction, ensures a field of view at a long distance. Generally, in order to avoid dazzling a rider of a surrounding vehicle or the like, the high beam is used in a situation where there is no vehicle or the like existing ahead at night. The low beam, which emits light in a downward direction, is used even in a situation where there is a vehicle or the like existing ahead. Therefore, in a normal case, a vehicle often runs with the low beam turned on.

When the vehicle that leans into turns is running on a straight road, an illumination range of a headlight light source (low beam) spreads evenly to the right and left in an area ahead in an advancing direction and below a horizontal plane including the headlight light source. When the vehicle that leans into turns is running on a road curving to the left, the vehicle runs with the vehicle body inclined to the left. Accordingly, the illumination range of the headlight light source spreads downward to the left. As a result, a nearer position on a running lane is illuminated. Thus, the illumination range in an area inside the curve and ahead in the advancing direction is reduced.

Therefore, a vehicle has been proposed in which, in addition to a main headlight that illuminates an area ahead of the vehicle, sub headlights configured to be turned on depending on the magnitude of a lean angle (angle of inclination of a vehicle body to the inner side of a curve relative to an upright state thereof) are provided as the headlight and arranged in a front cover (WO 2010/061651). In a vehicle disclosed in WO 2010/061651, the main headlight is arranged at the center of the vehicle, and each of the sub headlights is arranged at each of the right and left sides of the main headlight.

In the vehicle disclosed in WO 2010/061651, the sub headlights are turned on in accordance with an increase in the lean angle. Accordingly, at a time point when a light source is turned on, an illumination range of this light source is additionally provided. This can suppress a reduction in the illumination range which may be caused by inclination of the vehicle.

However, in some cases, in the course of an increase in the lean angle of the vehicle after the sub headlight is turned on, a rider may feel a difficulty in seeing the illumination range of the sub headlight or may feel uncomfortable about a change in the position and brightness of the illumination range of the sub headlight.

Additionally, the rider may feel a difficulty in seeing an area behind an obstacle (such as unevenness on a road surface) within the illumination range produced on the road surface by the sub headlight light source, or may feel uncomfortable.

In the vehicle disclosed in WO 2010/061651, sub headlight light sources are installed in order to compensate an illumination range of a main headlight light source which is reduced along with an increase in the lean angle. Here, similarly to the main headlight light source, the sub headlight light sources are also arranged in a front cover. The height of the sub headlight light source and the height of the main headlight light source are substantially the same. Therefore, when the height of the main headlight light source decreases along with an increase in the lean angle, the height of the sub headlight light source also decreases. Thus, the sub headlight light source is at a relatively low position when it is turned on.

As the lean angle further increases after the sub headlight light source is turned on at a relatively low position, the distance between the sub headlight light source and a ground surface becomes shorter. Under a state where the distance between the sub headlight light source and the ground surface is short, a change in the illumination range in response to the amount of change in the lean angle is large.

Accordingly, the illumination range of the sub headlight produced on the road surface and a cut-off line of the sub headlight approach to the vehicle at an increased speed. This increases the speed of reduction in the illumination range, and also increases the speed of change in the intensity of reflected light from the road surface. As a result, a situation occurs where the rider feels a difficulty in seeing the illumination range of the sub headlight or feels uncomfortable about a change in the position and brightness of the illumination range of the sub headlight. Moreover, since the sub headlight light source is at a relatively low position when it is turned on, an area of the road surface behind an obstacle existing on the road surface (such as unevenness on the road surface) is shadowed by the obstacle when seen from the rider. This consequently causes the rider to feel a difficulty in seeing the area behind the obstacle or feel uncomfortable.

It is an object of the present invention is to provide a vehicle that leans into turns as well as a method for controlling a sub headlight unit for use in a vehicle that leans into turns which suppress occurrence of a situation where a rider feels uncomfortable about a change in an illumination range in the course of an increase or decrease in the lean angle of a vehicle body.

According to the present invention said object is solved by a vehicle that leans into turns having the features of independent claim 1, and/or a method for controlling a sub headlight unit for use in a vehicle that leans into turns having the features of independent claim 10. Preferred embodiments are laid down in the dependent claims.

Accordingly, it is provided:

(1) A sub headlight unit for use in a vehicle that leans into turns,
the sub headlight unit including a sub headlight light source, the sub headlight unit being arranged in a position above and outward of a main headlight light source of the vehicle with respect to a width direction of the vehicle and distant from a vehicle body of the vehicle,
the sub headlight light source being configured to be turned on in accordance with a lean angle of the vehicle and to illuminate, from the position distant from the vehicle body, an area ahead and outward of the vehicle with respect to the width direction of the vehicle.

In a configuration of (1), the sub headlight light source is arranged in the position above the main headlight light source and distant from the vehicle body of the vehicle. This enables the sub headlight light source to produce illumination from a relatively high position. Therefore, a change in an illumination range in response to the amount of change in the lean angle can be suppressed. This can reduce the speed at which the illumination range of the sub headlight produced on a road surface and a cut-off line of the sub headlight approach to the vehicle. Along with this, the speed of reduction in the illumination range can be reduced, and the speed of change in the intensity of reflected light from the road surface can be reduced. As a result, occurrence of a situation where a rider feels a difficulty in seeing the illumination range of the sub headlight or feels uncomfortable about a change in the position and brightness of the illumination range of the sub headlight can be suppressed. Additionally, the sub headlight light source is at a relatively high position when it is turned on. Accordingly, an area of the road surface is easier to see from the rider. Thus, occurrence of a situation where the rider feels uncomfortable can be suppressed.

As described above, the main headlight is a light intended mainly to ensure a field of view of the rider, and has a higher output (power consumption) than that of a light (such as a flasher or a position light) intended mainly to enable a surrounding vehicle or the like to recognize the presence of the own vehicle. Thus, the main headlight requires a large heat dissipation mechanism, to cause a problem of a difficulty in downsizing.

Therefore, when the main headlight is arranged in a position distant from the vehicle body, the main headlight is noticeable, which causes a problem of design. Moreover, providing a relatively large main headlight in a position distant from the vehicle body results in a relatively high air resistance at a time of running. This lowers the running performance of the vehicle. Thus, it has been conventionally difficult to arrange the main headlight in a position distant from the vehicle body. Those skilled in the art also have considered that it is difficult to arrange the main headlight in a position distant from the vehicle body.

In this respect, the present inventors have focused on the fact that, although the sub headlight is a light intended mainly to ensure a field of view of the rider and has a high output similarly to the main headlight, the sub headlight is turned on in accordance with the lean angle and therefore a time period during which the sub headlight is continuously turned on is short, so that the amount of heat generation in the sub headlight does not become large.

Since the amount of heat generation does not become large, a heat dissipation mechanism can be downsized. As a result, the sub headlight itself can be downsized. This makes it possible to arrange the sub headlight in a position distant from the vehicle body. Since the sub headlight is downsized, its influence on the running performance is small. Additionally, arranging the sub headlight in a position distant from the vehicle body can exert a heat dissipation effect due to headwind. Therefore, the heat dissipation mechanism can be further downsized.

In this manner, the present teaching makes use of the feature that the sub headlight is turned on in accordance with the lean angle. Accordingly, the sub headlight is arranged in a position distant from the vehicle body. Thereby, occurrence of a situation where the rider feels uncomfortable about a change in the illumination range is suppressed in the course of an increase or decrease in the lean angle of the vehicle body, and additionally heat dissipation due to headwind is efficiently performed so that further downsizing is achieved.

(2) The sub headlight unit according to (1), wherein

the sub headlight light source is configured to be turned on in accordance with the lean angle of the vehicle leaning to the side opposite to the side where the sub headlight light source is arranged with respect to the width direction of the vehicle and to illuminate, from the position distant from the vehicle body, an area ahead and outward of the vehicle with respect to the width direction of the vehicle at the opposite side.

In a configuration of (2), the sub headlight light source arranged at the side opposite to the side to which the vehicle is leaning is moved upward in accordance with an increase in the lean angle. This enables the sub headlight light source configured to be turned on in accordance with the lean angle to produce illumination from a further higher position. As a result, an area of the road surface behind an obstacle existing on the road surface (such as unevenness on the road surface) is easier to see from the rider. Thus, occurrence of a situation where the rider feels uncomfortable can be more reliably suppressed.

(3) The sub headlight unit according to (1), wherein

the sub headlight light source is configured to be turned on in accordance with the lean angle of the vehicle leaning to the side where the sub headlight light source is arranged with respect to the width direction of the vehicle and to illuminate, from the position distant from the vehicle body, an area ahead and outward of the vehicle with respect to the width direction of the vehicle at the side where the sub headlight light source is arranged.

In a configuration of (3), when the vehicle leans to the side where the sub headlight light source is arranged, the sub headlight light source is moved downward in accordance with an increase in the lean angle. The sub headlight light source is arranged in a position above and outward of the main headlight light source with respect to the width direction of the vehicle and distant from the vehicle body. Therefore, the sub headlight light source is moved downward and outward of the headlight light source with respect to the width direction of the vehicle.

Normally, under a state where the vehicle is running straight ahead, the head of the rider is positioned on a center line of the vehicle (on a line extending vertically through the center of the vehicle in the upright state with respect to the width direction of the vehicle) when seen from the front side. In the vehicle that leans into turns, as described above, the rider shifts his/her own weight at a time of turning. Therefore, along with an increase in the lean angle, the head of the rider is moved outward and positioned downward. At this time, the sub headlight light source is also moved downward and outward of the headlight light source with respect to the width direction of the vehicle. This makes it possible that the sub headlight light source illuminates, from a position near the rider's eye, an area ahead and outward of the vehicle with respect to the width direction of the vehicle. Accordingly, the start point and orientation of a line segment that extends from the position of the rider's eye (start point) to a position the rider desires to see (end point) is close to the position of the sub headlight light source (start point) and the orientation of the optical axis of the sub headlight light source, respectively. As a result, an obstacle is unlikely to be shadowed when seen from the rider, and thus the rider easily recognizes the obstacle.

(4) The sub headlight unit according to any one of (1) to (3), wherein

the sub headlight unit is mounted to a vehicle component member of the vehicle, the vehicle component member being configured to coordinate with an operation on a handlebar performed by a rider,

a direction in which light is emitted from the sub headlight light source is changed in accordance with the lean angle of the vehicle and an operation performed on the handlebar.

Even though the lean angle of the vehicle body is constant, an operation performed on the handlebar is increased when the vehicle passes through a curve having a large curvature (a curve having a small radius) as compared with when the vehicle passes through a curve having a small curvature.

Therefore, when the vehicle passes through a curve having a large curvature, an operation on the handlebar toward the inner side of the curve is increased, so that the direction in which light is emitted from the sub headlight light source is moved to a large extent toward the inner side of the curve, too.

On the other hand, when the vehicle passes through a curve having a small curvature, an operation performed on the handlebar toward the inner side of the curve is reduced, so that the direction in which light is emitted from the sub headlight light source is moved to a small extent toward the inner side of the curve.

In this manner, a configuration of (4) makes use of the fact that the amount of operation performed on the handlebar varies in accordance with the curvature of a curve even though the vehicle is running with the same lean angle. Accordingly, the operation performed on the handlebar and the direction in which light is emitted from the sub headlight light source are made coordinate with each other. Thereby, illumination can be produced in a direction the rider desires to see.

(5) A vehicle component for use in a vehicle that leans into turns,
the vehicle component including the sub headlight unit according to any one of (1) to (4) and a light attachment portion to which the sub headlight unit is attached,
the light attachment portion is arranged in a position above and outward of a main headlight light source of the vehicle with respect to a width direction of the vehicle and distant from the vehicle body,
the sub headlight unit is mounted to the light attachment portion such that the sub headlight unit is visible when seen from the front side of the vehicle.

A configuration of (5) allows the sub headlight light source that is turned on in accordance with the lean angle to be mounted at a high position, and thus the sub headlight light source is able to illuminate, from a further higher position, an area ahead and outward with respect to the width direction of the vehicle. Accordingly, occurrence of a situation where the rider feels uncomfortable about a change in the illumination range can be suppressed in the course of an increase or decrease in the lean angle of the vehicle body.

(6) The vehicle component according to (5), wherein
the vehicle component is a rearview mirror.

In a configuration of (6), the sub headlight light source is mounted to the rearview mirror. This enables the sub headlight light source to illuminate, from a further higher position, an area ahead and outward with respect to the width direction of the vehicle. Accordingly, occurrence of a situation where the rider feels uncomfortable about a change in the illumination range can be suppressed in the course of an increase or decrease in the lean angle of the vehicle body. Moreover, heat dissipated from the sub headlight light source can be utilized to defog the rearview mirror.

(7) The vehicle component according to (5), wherein
the vehicle component is a handlebar guard.

In a configuration of (7), the sub headlight light source is mounted to the handlebar guard. This enables the sub headlight light source to illuminate, from a further higher position, an area ahead and outward with respect to the width direction of the vehicle. Accordingly, occurrence of a situation where the rider feels uncomfortable about a change in the illumination range can be suppressed in the course of an increase or decrease in the lean angle of the vehicle body.

(8) The vehicle component according to (5), wherein
the vehicle component is a handlebar.

In a configuration of (8), the sub headlight light source is mounted to the handlebar. This enables the sub headlight light source to illuminate, from a further higher position, an area ahead and outward with respect to the width direction of the vehicle. Accordingly, occurrence of a situation where the rider feels uncomfortable about a change in the illumination range can be suppressed in the course of an increase or decrease in the lean angle of the vehicle body.

(9) A sub headlight system for use in a vehicle that leans into turns,
the sub headlight system comprising:

the sub headlight unit according to any one of (1) to (4);
a detection part that detects a variable available for obtaining the lean angle of the vehicle; and
a control part that turns on the plurality of sub headlight light sources in accordance with the lean angle of the vehicle obtained based on a result of detection by the detection part.

A configuration of (9) enables the sub headlight light source to illuminate, from a further higher position, an area ahead and outward with respect to the width direction of the vehicle. Accordingly, occurrence of a situation where the rider feels uncomfortable about a change in the illumination range can be suppressed in the course of an increase or decrease in the lean angle of the vehicle body.

(10) A vehicle that leans into turns,
the vehicle comprising the system according to (9).

A configuration of (10) enables the sub headlight light source to illuminate, from a further higher position, an area ahead and outward with respect to the width direction of the vehicle. Accordingly, occurrence of a situation where the rider feels uncomfortable about a change in the illumination range can be suppressed in the course of an increase or decrease in the lean angle of the vehicle body.

These and other objects, features, aspects and advantages of the present invention will become apparent to those skilled in the art from the following detailed description, which, taken in conjunction with the accompanying drawings, discloses some embodiments of the present teaching.

[EFFECTS OF THE INVENTION]

The present invention achieves illumination with an illumination range suitable for a wide variety of running scenes, with suppression of a size increase.

[BRIEF DESCRIPTION OF THE DRAWINGS]

[FIG. 1] A front elevational view schematically showing a motorcycle according to a first embodiment of the present teaching.
[FIG. 2] A left side view schematically showing the motorcycle shown in FIG. 1.
[FIG. 3] A block diagram showing a basic configuration concerning sub headlight units of the motorcycle shown in FIG. 1.
[FIG. 4] (a) is a front elevational view schematically showing optical axes and cut-off lines of sub headlight light sources of the motorcycle in an upright state; and (b) is a front elevational view schematically showing the optical axes and the cut-off lines of the sub headlight light sources of the motorcycle when the sub headlight light sources are turned on.
[FIG. 5] A front elevational view schematically showing, on an enlarged scale, a part of the motorcycle shown in FIG. 1.
[FIG. 6] A left side view schematically showing, on an enlarged scale, a part of the motorcycle shown in FIG. 1.
[FIG. 7] (a) is a front elevational view schematically showing the sub headlight unit; and (b) is a cross-sectional view thereof as seen from the left side.
[FIG. 8] A front elevational view schematically showing a motorcycle according to a second embodiment of the present teaching.

[EMBODIMENTS FOR CARRYING OUT THE INVENTION]

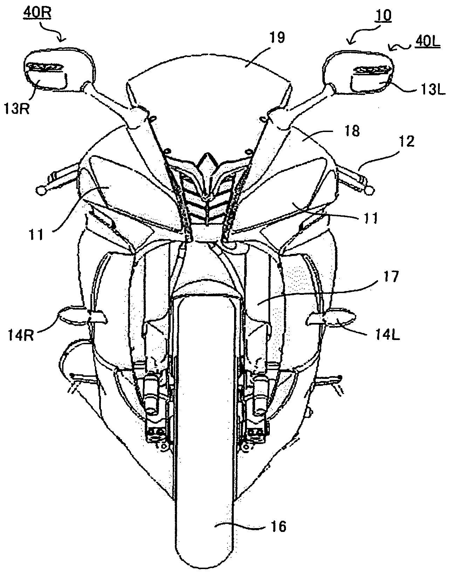

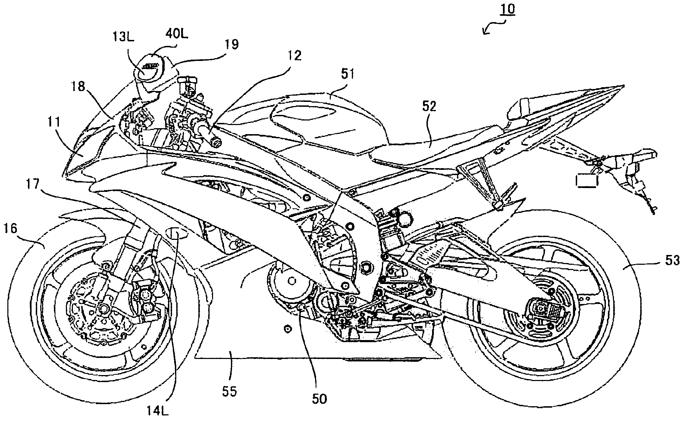

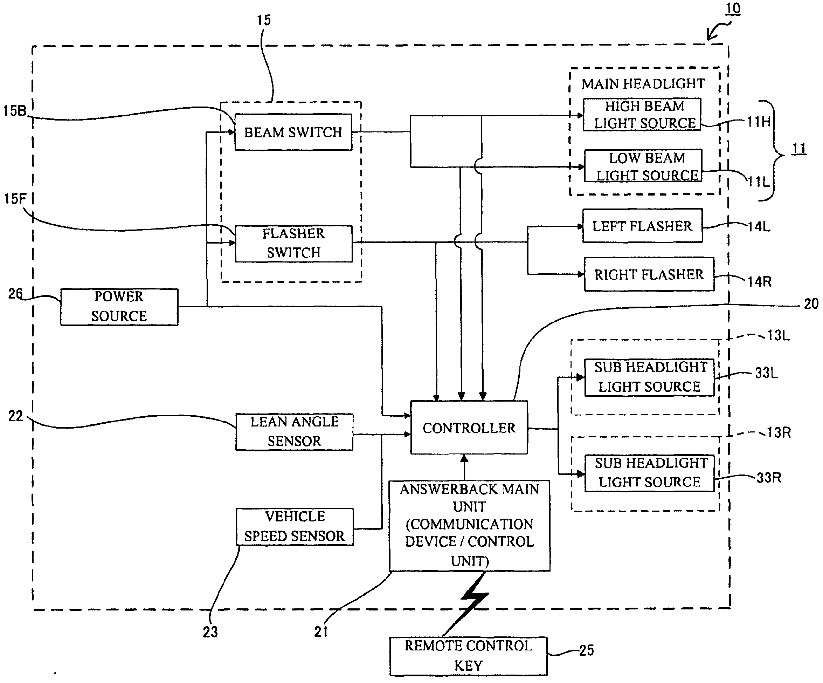

FIG. 1 is a front elevational view schematically showing a motorcycle according to an embodiment of the present teaching, and FIG. 2 is a left side view thereof.
A motorcycle 10 is an example of a vehicle that leans into turns according to the present teaching. According to the present teaching, no particular limitation is put on the vehicle that leans into turns. For example, saddle-ride type vehicles including motorcycles, three-wheeled motor vehicles, snowmobiles, and ATVs (all terrain vehicles) may be mentioned. In the following description, the terms "front" and "back" are terms with respect to an advancing direction of the vehicle, the terms "up" and "down" are terms with respect to the vertical direction of the vehicle, and the terms "right" and "left" are terms with respect to a rider.
The motorcycle 10 includes a handlebar 12. An operation switch 15 (not shown) is provided in a left portion of the handlebar 12 with respect to a width direction of the vehicle. The operation switch 15 includes a beam switch 15B and a flasher switch 15F (see FIG. 3). A steering shaft (not shown) is fixed to a center portion of the handlebar 12 with respect to the width direction of the vehicle. The steering shaft extends downward through a headpipe (not shown). A frontfork 17 is provided at a lower end of the steering shaft. A front wheel 16 is rotatably supported at the lower end of the frontfork 17. The headpipe is a member constituting a vehicle body frame. According to the present teaching, no particular limitation is put on the vehicle body frame, and a conventionally known configuration is adoptable.
According to the present teaching, a vehicle body includes the vehicle body frame, a cover that covers the vehicle body frame, various devices and apparatuses provided inside the cover, various devices and apparatuses provided to the vehicle body frame, and the like. Sub headlight units are provided in positions outside the vehicle body and distant from the vehicle body.
A front cover 18, which is a member constituting the vehicle body, covers a front part of the headpipe having the steering shaft passing therethrough. On the front surface of the front cover 18, main headlights 11 are provided at both right and left sides with respect to the width direction of the vehicle. The main headlight 11 includes, as a main headlight light source, a high beam light source 11 H (running headlight) and a low beam light source 11 L (passing headlight), though not shown in FIG. 1. The high beam light source 11 H illuminates an area ahead in front of the motorcycle 10 at a height equal to or above a horizontal plane of the main headlight 11. The low beam light source 11L illuminates an area ahead in front of the motorcycle 10 at a height below the horizontal plane of the main headlight 11.
Flashers 14L and 14R, serving as direction indicators, are provided at both sides of the motorcycle 10 with respect to the width direction of the vehicle. The flashers 14L and 14R are provided at a position below the upper end of the front wheel 16 when seen from the front side of the motorcycle 10 (FIG. 1).

A screen 19 having transparency is provided at the upper side of the front cover 18 and in a central portion with respect to the width direction of the vehicle. The screen 19 is inclined upward and rearward. The screen 19 is arranged at the front side of the handlebar 12.

Rearview mirrors 40 (40L and 40R) are provided above and lateral to the front cover 18. The rearview mirrors 40 are arranged at the outer sides of both right and left ends of the screen 19. The rearview mirror 40, which corresponds to a vehicle component of the present teaching, is arranged outside the front cover 18 included in the vehicle body (that is, provided outside the vehicle body). The rearview mirror 40 is arranged above and outward of the main headlight 11 (more specifically, the high beam light source 11 H and the low beam light source 11 L) with respect to the width direction of the vehicle. As shown in FIG. 1, sub headlight units 13L and 13R are provided in front portions of the rearview mirrors 40L and 40R with respect to the vehicle. Since the sub headlight units 13L and 13R are provided to the rearview mirrors 40L and 40R that are arranged outside the front cover 18 (vehicle body), the sub headlight units 13L and 13R are arranged in positions distant from the front cover 18 (vehicle body). The sub headlight units 13L and 13R are positioned such that they do not overlap the front cover 18 when seen from the front side of the vehicle. According to the present teaching, in this manner, it is preferable that the sub headlight unit is positioned such that it does not overlap the vehicle body (the vehicle body frame and the cover) with respect to a front-back direction when seen from the front side of the vehicle. This is because it can more effectively exerts a cooling effect due to headwind. It is to be noted that the sub headlight units 13L and 13R are positioned such that they do not overlap the screen 19 when seen from the front side.

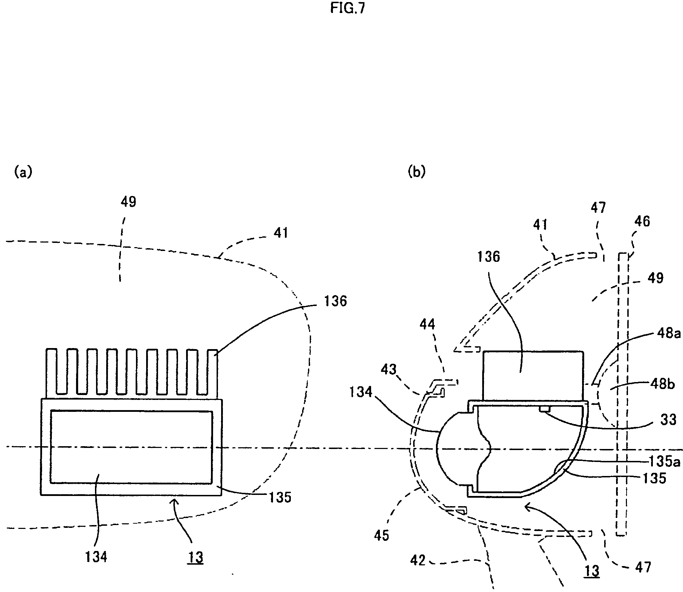

The sub headlight units 13L and 13R include sub headlight light sources 33L and 33R, though not shown in FIGS. 1 and 2. Each of the sub headlight light sources 33L and 33R illuminates, from a position distant from the front cover 18 (vehicle body), an area ahead and outward of the motorcycle 10 with respect to the width direction of the vehicle. Optical axes of the sub headlight light sources 33L and 33R are fixed, and not moved relative to the vehicle body in accordance with a lean angle. A reflector (FIG. 7(b)) of the sub headlight light source is also fixed, and not moved in accordance with the lean angle. In this embodiment, no particular limitation is put on the sub headlight light source. For example, an LED is adoptable. A mono-focus type light source is also adoptable as the sub headlight light source. In this embodiment, the rearview mirror 40 does not coordinate with an operation on the handlebar performed by the rider. However, according to the present teaching, it may be acceptable that the rearview mirrors 40L and 40R including the sub headlight units 13L and 13R are arranged in such positions (for example, on the handlebar 12) that the rearview mirrors 40L and 40R coordinate with the operation on the handlebar performed by the rider.

As shown in FIG. 2, a fuel tank 51 is provided rearward of the handlebar 12. A seat 52 is provided rearward of the fuel tank 51. An engine 50 is provided below the fuel tank 51. An under cover 55 is provided at a lateral side of the engine 50. A rear wheel 53 is provided rearward of the engine 50. The motorcycle 10 according to this embodiment adopts a conventionally known configuration except for the rearview mirror 40 (40L, 40R) which will be described later.

The sub headlight units 13L and 13R are arranged above and frontward of the engine 50. The sub headlight units 13L and 13R are arranged above and frontward of the seat 52. The sub headlight units 13L and 13R are arranged above and frontward of the fuel tank 51. The sub headlight units 13L and 13R are arranged above and frontward of the handlebar 12. The sub headlight units 13L and 13R are arranged higher than the uppermost end of the front cover 18.

FIG. 3 is a block diagram showing a basic configuration concerning the sub headlight light sources 33L and 33R of the motorcycle 10 shown in FIG. 1.

The operation switch 15 includes the beam switch 15B and the flasher switch 15F. The beam switch 15B is connected to the high beam light source 11 H and the low beam light source 11 L included in the main headlight 11. When the rider operates the beam switch 15B, turn-on/turn-off of the high beam light source 11 H and the low beam light source 11 L is switched in accordance with the operation performed on the beam switch 15B.

The flasher switch 15F is connected to the flashers 14L and 14R. When the rider operates the flasher switch 15F, one of the flashers 14L and 14R is caused to flash in accordance with the operation performed on the flasher switch 15F.

In the motorcycle 10, a lean angle sensor 22 and a vehicle speed sensor 23 are provided. In this embodiment, the lean angle sensor 22 is a gyro sensor that detects the angular velocity about the front-back axis of the motorcycle 10. The lean angle sensor 22 supplies, to a controller 20, a signal indicating the detected angular velocity (roll rate) about the front-back axis. The vehicle speed sensor 23 detects the vehicle speed, and supplies, to the controller 20, a signal indicating the detected vehicle speed. Each time a predetermined timing comes during running, the controller 20 calculates the lean angle of the motorcycle 10 based on the angular velocity about the front-back axis and the vehicle speed.

In this embodiment, the roll rate is integrated over time, and the vehicle speed is used as correction information, thereby calculating the lean angle. However, according to the present teaching, a method for calculating the lean angle is not limited to this example. In the calculation of the lean angle, the vehicle speed is not an essential variable. For calculating the lean angle, a conventionally known method is adoptable. For example, the calculation may be performed based on a static equilibrium equation by using the yaw rate (angular velocity about the vertical axis) and the vehicle speed. The correction information is not limited to the vehicle speed. For example, it may be acceptable to provide a plurality of gyro sensors and G sensors and use values obtained from these sensors and the vehicle speed as the correction information. Instead of the vehicle speed, GPS position information and/or geomagnetic information may be used as the correction information. No particular limitation is put on sensors (detection part) for detecting variables that are available for obtaining the lean angle. An appropriate sensor may be provided in accordance with variables available for the calculation.

The controller 20 includes a memory (not shown). The memory stores, in the form of data, a reference value (°) to be compared with the lean angle. In this embodiment, when the lean angle of the motorcycle 10 is equal to or greater than the reference value, the controller 20 turns on the sub headlight light source 33 that is arranged at the same side as the side to which the motorcycle 10 is leaning, so that light is emitted toward the same side as the side to which the motorcycle 10 is leaning. When the lean angle is less than the reference value, the controller 20 turns off the sub headlight light source 33.

The sub headlight light source 33 is connected to the controller 20. A power source 26 is connected to the high beam light source 11 H and the low beam light source 11 L via the beam switch 15B. The power source 26 is connected to the flashers 14L and 14R via the flasher switch 15F. The power source 26 is connected to the controller 20. An answerback main unit 21 is connected to the controller 20. The answerback main unit 21 receives a signal radio wave from a remote control key 25.

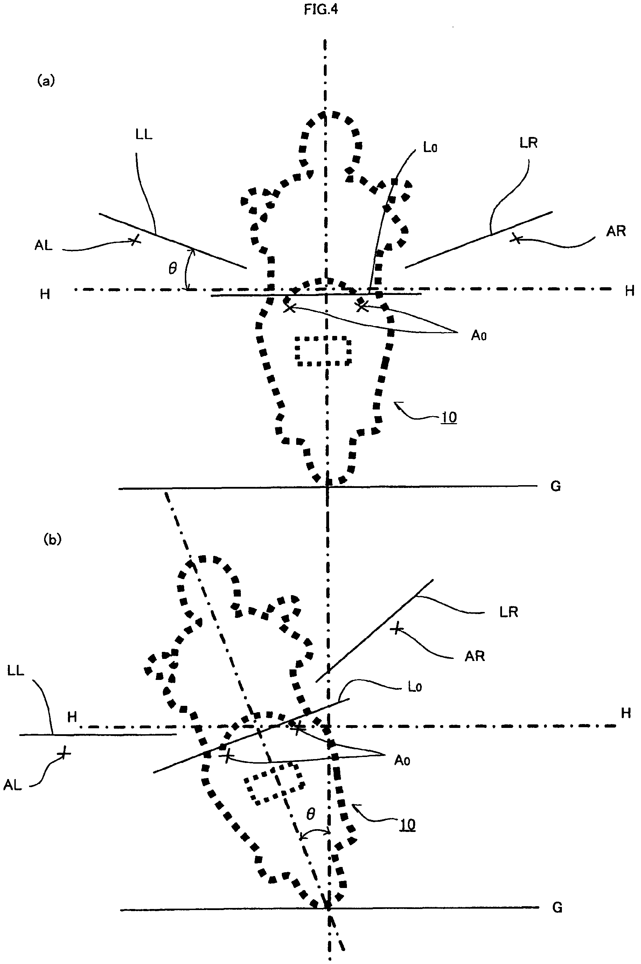

FIG. 4(a) is a front elevational view schematically showing the optical axes and cut-off lines of the sub headlight light sources 33L and 33R of the motorcycle 10 in an upright state. FIG. 4(b) is a front elevational view schematically showing the optical axes and the cut-off lines of the sub headlight light sources 33L and 33R of the motorcycle 10 when the sub headlight light sources 33L and 33R are turned on.

As shown in FIG. 4(a), the motorcycle 10 stands upright on a flat ground surface G. Optical axes $A_0$ of the two low beam light sources 11 L are at the same height, and located below a horizontal line H of the low beam light sources 11 L. Cut-off lines $L_0$ produced by the two low beam light sources 11 L are at the same height, and located above the optical axes $A_0$. The cut-off lines $L_0$ are located below the horizontal line H of the low beam light sources 11 L. The cut-off lines $L_0$ extend right and left along the width direction of the vehicle. Illumination ranges of the low beam light sources 11 L cover both right and left sides with respect to the width direction of the vehicle.

Optical axes AL and AR of the sub headlight light sources 33L and 33R are located outward of the two optical axes $A_0$ of the low beam light sources 11 L with respect to the width direction of the vehicle. The optical axes AL and AR of the sub headlight light sources 33L and 33R are located above the two optical axes $A_0$ of the low beam light sources 11 L. Cut-off lines LL and LR of the sub headlight light sources 33L and 33R are inclined so as to slope upward and outward with respect to the width direction of the vehicle. Inclination angles of the cut-off lines LL and LR are θ(°). No particular limitation is put on the value of θ, as long as it is a predetermined value more than 0°.

In this embodiment, the reference value (°) is set to be θ. Accordingly, when the motorcycle 10 is running in the upright state (θ=0), the sub headlight light sources 33L and 33R are not turned on. As shown in FIG. 4(b), when the motorcycle 10 is inclined to one side (to the left in FIG. 4) with respect to the width direction of the vehicle so that the lean angle reaches θ (reference value), the sub headlight light source 33L arranged at the same side (left side) as the side to which the motorcycle 10 is leaning is turned on. At this time, the cut-off line LL is horizontal. In this embodiment, since the inclination angle θ of the cut-off line LL and the reference value are set to be the same value, the cut-off line LL of the sub headlight light source 33L extends horizontally when the sub headlight light source 33L is turned on as a result of the lean angle reaching the reference value. However, the present teaching is not limited to this example. Here, a state where the inclination angle and the reference value are the same encompasses a state where these values are substantially the same.

The cut-off line LL of the sub headlight light source 33L defines the upper end edge of an illumination range of the sub headlight light source 33L, and therefore the illumination range of the sub headlight light source 33L is located below the cut-off line LL of the sub headlight light source 33L, though not shown in FIG. 4. Accordingly, in the upright state, the illumination range of the sub headlight light source 33L contains a space above the horizontal line H. The illumination range of the sub headlight light source 33L is located at the left side with respect to the width direction of the vehicle.

Except for whether the sub headlight light sources are provided at the right side or the left side of the symmetry, the sub headlight light source 33R is identical to the sub headlight light source 33L described above. Therefore, a description thereof will be omitted.

Here, according to the present teaching, the optical axis is a straight line that passes through a light source and the center of a maximum illuminance portion of emitted light. The center of the maximum illuminance portion of the emitted light can be identified by emitting light from a light source to a screen that is placed ahead of the light source. This screen illuminance test can be implemented by a method specified in JIS D1619. Also, the cut-off line and the illumination range having the predetermined illuminance can be identified based on a result (such as an isolux distribution map) of the screen illuminance test mentioned above. The cut-off line and the illumination range having the predetermined illuminance in a plan view can be identified based on a road-surface light distribution that is obtained by converting the result of the screen illuminance test mentioned above into the road-surface light distribution. The conversion into the road-surface light distribution can be implemented by a conventionally known method. To be specific, through commonly-used drawing and geometric calculation, conversion from a screen illuminance value into a road-surface illuminance value can be performed. In such a case, the following expression (I) is usable. In the following expression (I), D represents a light source, E represents a point on a road surface, and F represents a point of intersection at which the screen placed between D and E intersects with a straight line connecting D to E.

$$\text{Road-Surface Illuminance (Lx)} = \text{Screen Illuminance (Lx)} \times [(\text{Distance between D and F (m)}) / (\text{Distance between D and E (m)})]^2 \qquad \dots \text{(I)}$$

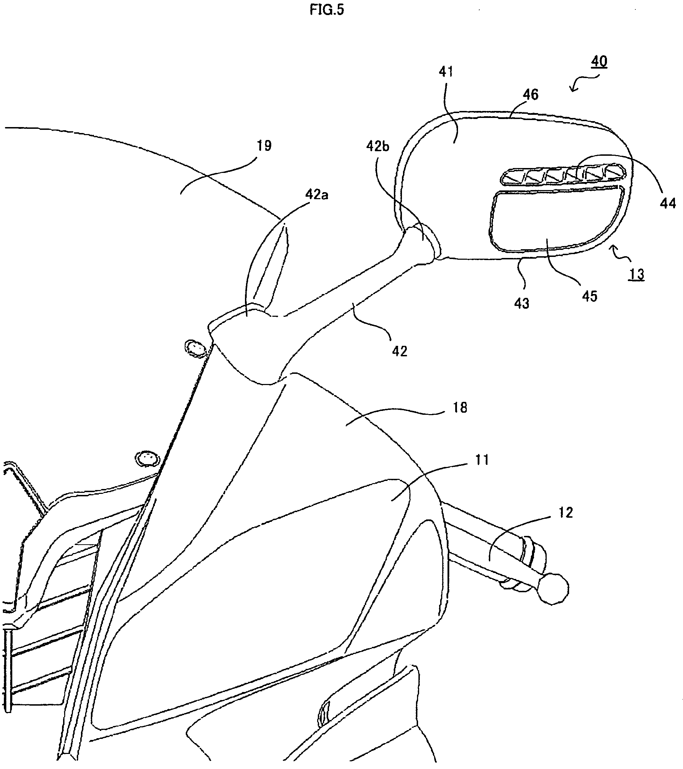

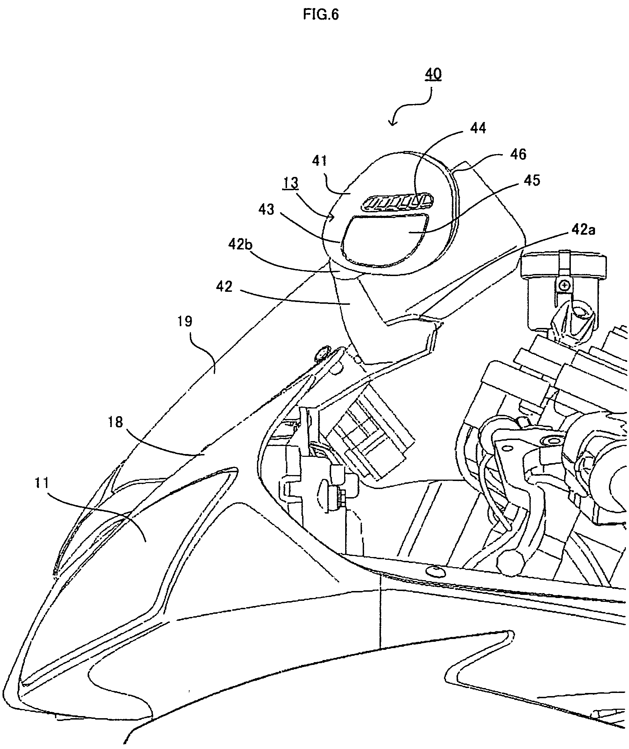

FIG. 5 is a front elevational view schematically showing, on an enlarged scale, a part of the motorcycle 10 shown in FIG. 1. FIG. 6 is a left side view schematically showing, on an enlarged scale, a part of the motorcycle 10 shown in FIG. 1. FIG. 7(a) is a front elevational view schematically showing the sub headlight unit 13. FIG. 7(b) is a cross-sectional view thereof as seen from the left side. In FIGS. 5 to 7, the rearview mirror 40L is shown. Except for whether the rearview mirrors are provided at the right side or the left side of the symmetry, the structure of the rearview mirror 40R is identical to that of the rearview mirror 40L. Therefore, a description thereof will be omitted.

As shown in FIGS. 5 and 6, the rearview mirror 40 is provided above the front cover 18. The rearview mirror 40 is provided at the outer side (left side) of the screen 19 with respect to the width direction of the vehicle.

The rearview mirror 40 includes a mirror stay 42. The mirror stay 42 has, at the lower end thereof, an attachment portion 42a. The attachment portion 42a is mounted (fixed) to the outer side of the front cover 18. The attachment portion 42a has a movable mechanism (not shown) provided between the attachment portion 42a and the mirror stay 42. This enables the orientation of the mirror stay 42 to be changed under a state where the attachment portion 42a is fixed to the front cover 18. A back-surface cover 41 of the rearview mirror 40 is mounted to the upper end of the mirror stay 42 with interposition of a coupling portion 42b. The coupling portion 42b is provided at the lower and inner side (right side) of the back-surface cover 41 with respect to the width direction of the vehicle. The coupling portion 42b includes a movable mechanism (not shown). Thus, the orientation of the back-surface cover 41 relative to the mirror stay 42 can be changed.

As shown in FIG. 7(b), the back-surface cover 41 has a shape protruding toward the front side with respect to the front-back direction of the vehicle. A mirror portion 46 having a flat plate shape is provided rearward of the back-surface cover 41 with respect to the front-back direction of the vehicle. That is, the back-surface cover 41 is arranged at the front side with respect to the front-back direction of the vehicle, and the mirror portion 46 is arranged at the rear side with respect to the front-back direction of the vehicle. The back-surface cover 41 and the mirror portion 46 define an accommodation space 49 for accommodating the sub headlight unit 13. The accommodation space 49 is formed between the back-surface cover 41 and the mirror portion 46.

The back-surface cover 41 has, in a lower portion thereof, an opening 43 formed at the front side with respect to the front-back direction of the vehicle. The opening 43 is positioned in an outer portion (left portion) of the back-surface cover 41 with respect to the width direction of the vehicle. The opening 43 is provided with an outer lens 45 having transparency. In the back-surface cover 41, a ventilation opening 44 is formed above the outer lens 45. A forefront end of the outer lens 45 is positioned most ahead among the parts of the back-surface cover 41.

In the accommodation space 49, a support portion 48a serving as a light attachment portion is provided. The support portion 48a is fixed to an inner surface of the back-surface cover 41, though not shown in the drawings. The sub headlight unit 13 is supported at the front side of the support portion 48a.

Accordingly, it is possible to adjust the orientation of the sub headlight unit 13 (a direction in which light is emitted from the sub headlight light source 33) by changing the orientation of the mirror stay 42 and/or the back-surface cover 41 with use of the movable mechanisms arranged at both ends of the mirror stay 42. Although the movable mechanisms are provided at both ends of the mirror stay 42 in this embodiment, it may be also acceptable that a movable mechanism is provided at one end of the mirror stay 42.

The mirror portion 46 is arranged rearward of the support portion 48a with interposition of a movable portion 48b. Accordingly, the orientation of the mirror portion 46 can be adjusted separately from the orientation of the sub headlight unit 13. A gap 47 is provided between an outer peripheral edge of the mirror portion 46 and an outer peripheral edge of the back-surface cover 41. The gap 47 allows headwind having flowed through the ventilation opening 44 into the accommodation space 49 to be discharged from the accommodation space 49, and also ensures a movable range of the mirror portion 46.

As shown in FIG. 7(b), the sub headlight unit 13 includes the sub headlight light source 33 (LED) mounted on a substrate (not shown), a casing 135 that accommodates the substrate having the sub headlight light source 33 mounted thereon, an inner lens 134 that allows light emitted from the sub headlight light source 33 to pass therethrough to the outside, and a heat dissipation fin 136. In the casing 135, the sub headlight light source 33 is arranged to be oriented downward, and emits light downward. Light emitted from the sub headlight light source 33 is reflected toward the front by a reflection surface 135a serving as a reflector provided within the casing 135. Then, the light passes through the inner lens 134, and further through the outer lens 45 arranged frontward of the inner lens 134. Thus, the light is emitted.

As described above, in the motorcycle 10, the sub headlight light source 33 is provided to the rearview mirror 40, and arranged in a position above the main headlight light source (the high beam light source 11 H and the low beam light source 11 L) and distant from the vehicle body (front cover 18). This enables the sub headlight light source 33 to produce illumination from a relatively high position. Therefore, occurrence of a situation where the rider feels uncomfortable about a change in the illumination range can be suppressed in the course of an increase or decrease in the lean angle of the vehicle body.

Although this embodiment illustrates a case where the sub headlight unit 13 is provided to the support portion 48a within the accommodation space 49 of the rearview mirror 40, the present teaching is not limited to this example. In a case of providing the sub headlight unit 13 to the rearview mirror 40, the sub headlight unit 13 can be arranged at any position on the rearview mirror 40 as long as the position is above and outward of the main headlight light source 11 with respect to the width direction of the vehicle and distant from the vehicle body (front cover 18) of the motorcycle 10.

Moreover, in this embodiment, the ventilation opening 44 is formed above the outer lens 45. Since the outer lens 45 and the sub headlight unit 13 arranged rearward of the outer lens 45 overlap each other with respect to the front-back direction, the ventilation opening 44 is positioned above the sub headlight unit. However, according to the present teaching, the position of the ventilation opening is not particularly limited. For example, the ventilation opening may be formed at a lateral side of the sub headlight unit with respect to the width direction of the vehicle or may be formed below the sub headlight unit, when seen from the front side of the vehicle in the upright state. According to the present teaching, the position of the gap for discharging the headwind to the outside of the accommodation space is not limited to the position illustrated in the embodiment.

It is not always necessary to form the ventilation opening and the gap. According to the present teaching, the sub headlight unit is provided in a position outside the vehicle body and distant from the vehicle body. Therefore, the cooling effect due to headwind can be efficiently obtained even though the above-mentioned ventilation opening and gap are not formed. Furthermore, according to the present teaching, it is not always necessary that the sub headlight unit 13 includes the heat dissipation fin 136.

This embodiment illustrates a case where a vehicle component member to which the sub headlight unit 13 is mounted is the rearview mirror 40. Instead, according to the present teaching, the vehicle component member to which the sub headlight unit is mounted may be a handlebar guard.

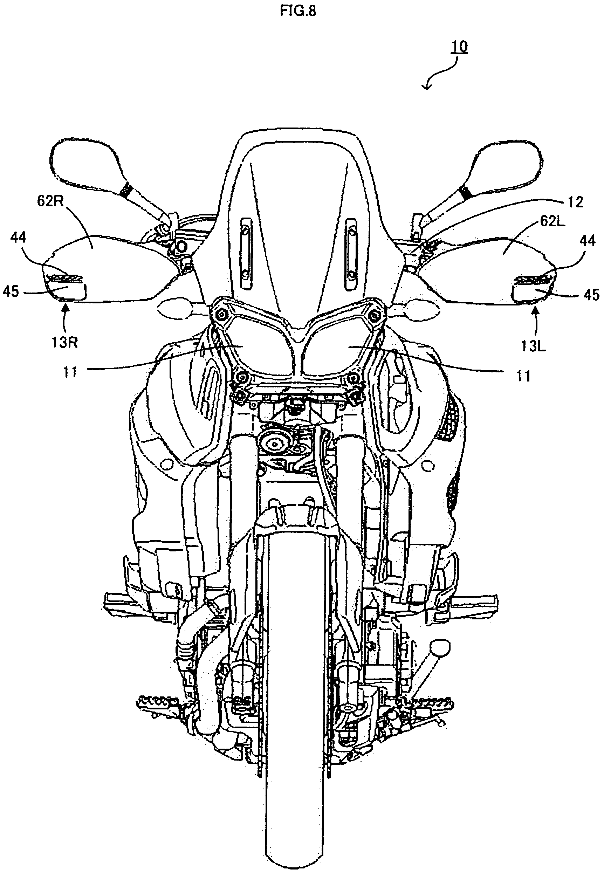

FIG. 8 is a front elevational view schematically showing a motorcycle 10 according to a second embodiment of the present teaching.

In the motorcycle 10, the sub headlight units 13L and 13R are mounted to handlebar guards 62L and 62R that cover both right and left ends of the handlebar 12 with respect to the width direction of the vehicle. In this embodiment, the sub headlight units 13L and 13R are mounted to light attachment portions (not shown) provided within the handlebar guards 62L and 62R. Each of the handlebar guards 62L and 62R has, in a front side portion thereof with respect to the front-back direction of the vehicle, the outer lens 45 and the ventilation opening 44.

The handlebar guards 62L and 62R are arranged in positions above and outward of the main headlights 11 (main headlight light sources) with respect to the width direction of the vehicle and distant from the vehicle body. This enables illumination to be produced from a relatively high position. Therefore, occurrence of a situation where the rider feels uncomfortable about a change in the illumination range can be suppressed in the course of an increase or decrease in the lean angle of the vehicle body.

The handlebar guards 62L and 62R correspond to a vehicle component member configured to coordinate with an operation on the handlebar performed by the rider. The sub headlight units 13L and 13R mounted to the handlebar guards 62L and 62R coordinate with an operation on the handlebar performed by the rider, and directions in which light is emitted from the sub headlight light sources 33L and 33R are changed in accordance with the lean angle of the motorcycle 10 and an operation performed on the handlebar.

According to the present teaching, the vehicle component member to which the sub headlight unit is mounted is not limited to the above-described example. In another possible example, the sub headlight unit may be mounted to the handlebar. In such a case, the light attachment portion included in the handlebar is arranged in a position above and outward of the main headlight light source with respect to the width direction of the vehicle and distant from the vehicle body. The handlebar corresponds to the vehicle component member configured to coordinate with an operation on the handlebar performed by the rider.

According to the present teaching, it is preferable that, as illustrated in these embodiments, the sub headlight light source (33L) is turned on in accordance with the lean angle of the motorcycle 10 leaning to the side (left side) where the sub headlight light source (33L) is arranged, and the sub headlight light source (33L) illuminates, from a position distant from the vehicle body of the motorcycle 10, an area ahead and outward of the motorcycle 10 with respect to the width direction of the vehicle at the side (left side) where the sub headlight light source (33L) is arranged. The sub headlight light sources 33L and 33R can be turned on at positions near the head of the rider which is moved downward in accordance with an increase in the lean angle. Therefore, an obstacle is unlikely to be shadowed when seen from the rider, and thus the rider easily recognizes the obstacle.

According to the present teaching, it is also preferable that the sub headlight light source (33L) is turned on in accordance with the lean angle of the motorcycle 10 leaning to the side (right side) opposite to the side where the sub headlight light source (33L) is arranged, and the sub headlight light source (33L) illuminates, from a position distant from the vehicle body of the motorcycle 10, an area ahead and outward of the motorcycle 10 with respect to the width direction of the vehicle at the side (right side) opposite to the side where the sub headlight light source (33L) is arranged. The sub headlight light source arranged at the side opposite to the side to which the motorcycle 10 is leaning is moved upward in accordance with an increase in the lean angle. This enables illumination to be produced from a further higher position. As a result, an area of the road surface behind an obstacle existing on the road surface (such as unevenness on the road surface) is easier to see from the rider. Thus, occurrence of a situation where the rider feels uncomfortable can be more reliably suppressed.

The lean angle sensor 22 and the vehicle speed sensor 23 correspond to a detection part for detecting variables available for obtaining the lean angle of the motorcycle 10. Although the detection part includes the lean angle sensor 22 and the vehicle speed sensor 23 in this embodiment, the present teaching is not limited to this example. For example, the detection part may include the lean angle sensor 22 while not including the vehicle speed sensor 23. The controller 20 corresponds to a control part of the present teaching. However, a hardware configuration of the present teaching is not limited to this example. The control part determines whether or not the lean angle of the motorcycle 10 has reached the reference value based on the variables detected by the detection part. At this time, it is not always necessary that the control part calculates the lean angle. Details of processing performed in the control part are not particularly limited. For example, it may be possible that a memory provided in the controller 20 serving as the control part stores, in the form of data, a table in which the angular velocity (roll rate) and the vehicle speed are associated with a result of whether or not the lean angle has reached the reference value. In this case, the control part refers to the table based on the angular velocity and the vehicle speed, and thereby can determine whether or not the lean angle has reached the reference value without calculating the lean angle.

In this embodiment, the lean angle is the angle of inclination of the vehicle body to the inner side of a curve relative to the upright state (vertical direction). However, the present teaching is not limited to this example. The lean angle may be the angle of inclination of the vehicle body to the inner side of a curve relative to a direction perpendicular to a road surface. As a method and a device for measuring the angle of inclination of the vehicle body to the inner side of a curve relative to the direction perpendicular to the road surface, conventionally known ones are adoptable.

This embodiment illustrates a case where the sub headlight unit 13 is a member separate from the control part (controller 20) and the detection part (the lean angle sensor 22 and the vehicle speed sensor 23). However, the present teaching is not limited to this example. The sub headlight unit may include at least one of the control part, a communication part, and the detection part.

According to the present teaching, it may be acceptable that a plurality of sub headlight units are mounted to one vehicle component member. Additionally, it may be acceptable that one sub headlight unit includes a plurality of sub headlight light sources. That is, one vehicle component member may include a plurality of sub headlight light sources. In such a case, the sub headlight light sources may be configured to be turned on upon the same lean angle, or may be configured to be turned on upon different lean angles. Moreover, the sub headlight unit may include a plurality of sub headlight light sources that are configured to be turned on upon the same lean angle, or may include a plurality of sub headlight light sources that are configured to be turned on upon different lean angles. Furthermore, a plurality of vehicle component members each including the sub headlight unit may be provided in one vehicle.

This embodiment illustrates a case where the sub headlight light source is turned on in accordance with the lean angle. Instead, according to the present teaching, the sub headlight light source may be configured such that a turn-on function in accordance with the lean angle is manually activated or deactivated. In this case as well, the sub headlight light source is turned on not manually but in accordance with the lean angle. In the flasher, on the other hand, flashing/turn-off is manually switched. In this manner, the sub headlight light source is different from the flasher and the main headlight.

The sub headlight light source may be also configured such that an instruction for turn-on or turn-off is manually inputted. In such a case, when the instruction is not inputted, the sub headlight light source is turned on in accordance with the lean angle, while when the instruction is inputted, turn-on or turn-off is performed in accordance with the instruction. In this case as well, the sub headlight light source is different from the flasher, in that a function of turning on the sub headlight light source in accordance with the lean angle is provided.

According to the present teaching, turning on the sub headlight light source in accordance with the lean angle is not necessarily limited to directly changing the sub headlight light source from a turn-off state to a turn-on state in accordance with the lean angle, but may also include gradually changing the sub headlight light source from the turn-off state to the turn-on state in accordance with the lean angle. Here, gradually changing the sub headlight light source from the turn-off state to the turn-on state in accordance with the lean angle includes continuously changing the sub headlight light source from the turn-off state to the turn-on state and stepwise changing the sub headlight light source from the turn-off state to the turn-on state. The turn-on state is not limited to a full light turn-on state at the rated power level, but may also include a dimmed light turn-on state in which the output is controlled to less than the output in the full light turn-on state. In the full light turn-on state, the turn-on may be performed with an output higher than the rated power (for example, with the maximum output). It is to be noted that the output in the dimmed light turn-on state is higher than the output in the turn-off state. Turning on the sub headlight light source in accordance with the lean angle may include changing the brightness of the sub headlight light source to a predetermined brightness higher than the brightness in the turn-off state in accordance with the lean angle.

In other words, turning on the sub headlight light source in accordance with the lean angle is not limited to the following case (i), but may also include the following cases (ii) to (iv).

(i) The sub headlight light source is directly or gradually changed from the turn-off state to the full light turn-on state in accordance with the lean angle.
(ii) The sub headlight light source is directly or gradually changed from the turn-off state to the dimmed light turn-on state in accordance with the lean angle.
(iii) The sub headlight light source is directly or gradually changed from the dimmed light turn-on state to the full light turn-on state in accordance with the lean angle.
(iv) The sub headlight light source is directly or gradually changed from a first dimmed light turn-on state to a second dimmed light turn-on state in accordance with the lean angle (the brightness in the second dimmed light turn-on state is higher than the brightness in the first dimmed light turn-on state).

Here, in a case where the sub headlight light source is a light source (for example, an LED) whose brightness is controlled under a pulse width modulation control, turning on the sub headlight light source in accordance with the lean angle may include continuously or gradually changing the duty cycle of the sub headlight light source from 0 to a value greater than 0 in accordance with the lean angle.

In the description of this embodiment, the sub headlight light source is turned on in accordance with the lean angle. Here, the sub headlight light source is turned on in accordance with the lean angle because the sub headlight light source functions mainly as a light for ensuring the field of view of the rider of the vehicle. Therefore, in a well-lit situation, for example, in daytime, the sub headlight light source may not necessarily be turned on in accordance with the lean angle.

The embodiments also discloses a method for controlling a sub headlight unit 13L,13R for use in a vehicle that leans into turns. The sub headlight unit 13L,13R including a sub headlight light source 33L,33R. The sub headlight unit 13L,13R being arranged in a position above and outward of a main headlight light source 11H,11L of the vehicle with respect to a width direction of the vehicle and distant from a vehicle body of the vehicle. The method comprises:

turning on the sub headlight light source (33L,33R) in accordance with a lean angle of the vehicle, and
illuminating, from the position distant from the vehicle body, an area ahead and outward of the vehicle with respect to the width direction of the vehicle.

Preferably, the method further comprises:

turning on the sub headlight light source 33L,33R in accordance with the lean angle of the vehicle leaning to the side opposite to the side where the sub headlight light source 33L,33R is arranged with respect to the width direction of the vehicle, and
illuminating, from the position distant from the vehicle body, an area ahead and outward of the vehicle with respect to the width direction of the vehicle at the opposite side.

Preferably, the method further comprises:

turning on the sub headlight light source (33L,33R) in accordance with the lean angle of the vehicle leaning to the side where the sub headlight light source (33L,33R) is arranged with respect to the width direction of the vehicle, and
illuminating, from the position distant from the vehicle body, an area ahead and outward of the vehicle with respect to the width direction of the vehicle at the side where the sub headlight light source (33L,33R) is arranged.

Preferably, the sub headlight unit 13L,13R is mounted to a vehicle component member of the vehicle, the vehicle component member being configured to coordinate with an operation on a handlebar performed by a rider, the method further comprises:

changing a direction in which light is emitted from the sub headlight light source 33L,33R in accordance with the lean angle of the vehicle and an operation performed on the handlebar.

[DESCRIPTION OF THE REFERENCE SIGNS]

| | |
|---|---|
| 10 | motorcycle (vehicle that leans into turns) |
| 11 | main headlight |
| 11H | high beam light source (main headlight light source) |
| 11L | low beam light source (main headlight light source) |
| 12 | handlebar |
| 13L, 13R | sub headlight unit |
| 134 | inner lens |
| 135 | casing |
| 135a | reflection surface |
| 136 | heat dissipation fin |
| 14L, 14R | flasher |
| 15 | operation switch |
| 16 | front wheel |
| 17 | frontfork |
| 18 | front cover |
| 19 | screen |
| 20 | controller |
| 22 | lean angle sensor |
| 23 | vehicle speed sensor |
| 33L, 33R | sub headlight light source |
| 40 | rearview mirror |
| 41 | back-surface cover |
| 42 | mirror stay |
| 42a | attachment portion |
| 42b | coupling portion |
| 43 | opening |
| 44 | ventilation opening |
| 45 | outer lens |
| 46 | mirror portion |
| 47 | gap |
| 48a | support portion |
| 48b | movable portion |
| 49 | accommodation space |
| 50 | engine |
| 51 | fuel tank |
| 52 | seat |
| 53 | rear wheel |
| 55 | undercover |
| 62 | handlebar guard |

**Claims**

1. A vehicle that leans into turns comprising:

   a main headlight light (11) with a main headlight light source (11H,11L); and
   a sub headlight system with a sub headlight unit (13L,13R) including a sub headlight light source (33L,33R), the sub headlight light source (33L,33R) being configured to be turned on in accordance with a lean angle of the vehicle and to illuminate an area ahead and outward of the vehicle with respect to the width direction of the vehicle, wherein the sub head light system comprises
   a detection part that detects a variable available for obtaining the lean angle of the vehicle; and

a control part that turns on the plurality of sub headlight light sources (33L,33R) in accordance with the lean angle of the vehicle obtained based on a result of detection by the detection part, **characterized in that**

the sub headlight unit (13L,13R) being arranged in a position above and outward of the main headlight light source (11H,11L) of the vehicle with respect to a width direction of the vehicle and distant from a vehicle body of the vehicle,

the sub headlight light source (33L,33R) being configured to be turned on in accordance with the lean angle of the vehicle to illuminate, from the position distant from the vehicle body, the area ahead and outward of the vehicle with respect to the width direction of the vehicle.

2. A vehicle that leans into turns according to claim 1, **characterized in that** the sub headlight light source (33L,33R) is configured to be turned on in accordance with the lean angle of the vehicle leaning to the side opposite to the side where the sub headlight light source (33L,33R) is arranged with respect to the width direction of the vehicle and to illuminate, from the position distant from the vehicle body, an area ahead and outward of the vehicle with respect to the width direction of the vehicle at the opposite side.

3. A vehicle that leans into turns according to claim 1, **characterized in that** the sub headlight light source (33L,33R) is configured to be turned on in accordance with the lean angle of the vehicle leaning to the side where the sub headlight light source (33L,33R) is arranged with respect to the width direction of the vehicle and to illuminate, from the position distant from the vehicle body, an area ahead and outward of the vehicle with respect to the width direction of the vehicle at the side where the sub headlight light source (33L,33R) is arranged.

4. A vehicle that leans into turns according to any one of claims 1 to 3, **characterized in that** the sub headlight unit (13L,13R) is mounted to a vehicle component member of the vehicle, the vehicle component member being configured to coordinate with an operation on a handlebar performed by a rider,

a direction in which light is emitted from the sub headlight light source (33L,33R) is changed in accordance with the lean angle of the vehicle and an operation performed on the handlebar.

5. A vehicle that leans into turns according to any one of claims 1 to 4, **characterized by** a vehicle component including a light attachment portion (48a) to which the sub headlight unit (13L,13R) is attached,

the light attachment portion (48a) is arranged in a position above and outward of a main headlight light source (11 H,11 L) of the vehicle with respect to a width direction of the vehicle and distant from the vehicle body,

the sub headlight unit (13L,13R) is mounted to the light attachment portion (48a) such that the sub headlight unit (13L,13R) is visible when seen from the front side of the vehicle.

6. A vehicle that leans into turns according to claim 5, **characterized in that** the vehicle component is a rearview mirror (40).

7. A vehicle that leans into turns according to claim 5, **characterized in that** the vehicle component is a handlebar guard (62).

8. A vehicle that leans into turns according to claim 5, **characterized in that** the vehicle component is a handlebar (12).

9. A method for controlling a sub headlight unit (13L,13R) for use in a vehicle that leans into turns, the sub headlight unit (13L,13R) including a sub headlight light source (33L,33R), the sub headlight unit (13L,13R) being arranged in a position above and outward of the main headlight light source (11H,11L) of the vehicle with respect to a width direction of the vehicle and distant from a vehicle body of the vehicle,

the method comprises:

providing a vehicle according to claims 1-8;
detecting a variable available for obtaining a lean angle of the vehicle; and
turning on the sub headlight light source (33L,33R) in accordance with the detected variable according to the lean angle of the vehicle, and
illuminating, from the position distant from the vehicle body, an area ahead and outward of the vehicle with respect to the width direction of the vehicle.

10. A method for controlling a sub headlight unit (13L,13R) according to claim 9, further comprising:

turning on the sub headlight light source (33L,33R) in accordance with the lean angle of the vehicle leaning to the side opposite to the side where the sub headlight light source (33L,33R) is arranged with respect to the width direction of the vehicle, and illuminating, from the position distant from the vehicle body, an area ahead and outward of the vehicle with respect to the width direction of the vehicle at the opposite side.

**11.** A method for controlling a sub headlight unit (13L,13R) according to claim 9, further comprising:

turning on the sub headlight light source (33L,33R) in accordance with the lean angle of the vehicle leaning to the side where the sub headlight light source (33L,33R) is arranged with respect to the width direction of the vehicle, and

illuminating, from the position distant from the vehicle body, an area ahead and outward of the vehicle with respect to the width direction of the vehicle at the side where the sub headlight light source (33L,33R) is arranged.

**12.** A method for controlling a sub headlight unit (13L,13R) according to any one of claims 9 to 11, wherein the sub headlight unit (13L,13R) is mounted to a vehicle component member of the vehicle, the vehicle component member being configured to coordinate with an operation on a handlebar performed by a rider, the method comprises:

changing a direction in which light is emitted from the sub headlight light source (33L,33R) in accordance with the lean angle of the vehicle and an operation performed on the handlebar.

## Patentansprüche

**1.** Ein Fahrzeug, das sich in Kurven legt, umfasst:

einen Haupt-Scheinwerfer (11) mit einer Haupt-Scheinwerfer-Lichtquelle (11 H, 11 L); und
ein Unter-Scheinwerfer-System mit einer Unter-Scheinwerfer-Einheit (13L, 13R), die eine Unter-Scheinwerfer-Lichtquelle (33L, 33R) beinhaltet,
die Unter-Scheinwerfer-Lichtquelle (33L, 33R) ist konfiguriert, um in Übereinstimmung mit einem Neigungs-Winkel des Fahrzeugs angeschaltet zu werden, um einen Bereich vor und außerhalb des Fahrzeugs mit Bezug auf die Breiten-Richtung des Fahrzeugs auszuleuchten, wobei das Unter-Scheinwerfer-System umfasst einen Erfassungs-Teil, der eine Variable, verfügbar um einen Neigungs-Winkel des Fahrzeugs zu erhalten, erfasst; und einen Steuer-Teil, der die Mehrzahl von Unter-Scheinwerfer-Lichtquellen (33L, 33R) in Übereinstimmung mit dem Neigungs-Winkel des Fahrzeugs, erhalten auf Grund eines Ergebnisses der Erfassung durch den Erfassungs-Teil, anschaltet, **dadurch gekennzeichnet, dass** die Unter-Scheinwerfer-Einheit (33L, 33R) in einer Position oberhalb und außerhalb der Haupt-Scheinwerfer-Lichtquelle (11 H, 11 L) des Fahrzeugs, mit Bezug auf die Breiten-Richtung des Fahrzeugs, und beabstandet von einem Fahrzeugkörper des Fahrzeugs, angeordnet ist,
die Unter-Scheinwerfer-Lichtquelle (33L, 33R) konfiguriert ist, um in Übereinstimmung mit dem Neigungs-Winkel des Fahrzeugs angeschaltet zu werden, um von einer Position, beabstandet von dem Fahrzeugkörper, dem Bereich vor und außerhalb des Fahrzeugs mit Bezug auf die Breiten-Richtung des Fahrzeugs auszuleuchten.

**2.** Ein Fahrzeug, das sich in Kurven legt gemäß Anspruch 1, **dadurch gekennzeichnet, dass** die Unter-Scheinwerfer-Lichtquelle (33L, 33R) konfiguriert ist, um in Übereinstimmung mit dem Neigungs-Winkel des Fahrzeug, das sich zu der Seite gegenüber zu der Seite an der die Unter-Scheinwerfer-Lichtquelle (33L, 33R) angeordnet ist, mit Bezug auf die Breiten-Richtung des Fahrzeugs, angeschaltet zu werden, und um von der Position, beabstandet von dem Fahrzeugkörper, einen Bereich vor und außerhalb des Fahrzeugs mit Bezug auf die Breiten-Richtung des Fahrzeugs an der gegenüberliegenden Seite auszuleuchten.

**3.** Ein Fahrzeug, das sich in Kurven legt gemäß Anspruch 1, **dadurch gekennzeichnet, dass** die Unter-Scheinwerfer-Lichtquelle (33L, 33R) konfiguriert ist, um in Übereinstimmung mit dem Neigungs-Winkel des Fahrzeugs, das sich zu der Seite neigt, zu der die Unter-Scheinwerfer-Lichtquelle (33L, 33R) angeordnet ist, mit Bezug auf die Breiten-Richtung des Fahrzeugs, angeschaltet zu werden, und um von der Position, beabstandet von dem Fahrzeugkörper, einen Bereich vor und außerhalb des Fahrzeugs mit Bezug auf die Breiten-Richtung des Fahrzeugs an der Seite an der die Unter-Scheinwerfer-Lichtquelle (33L, 33R) angeordnet ist, auszuleuchten.

**4.** Ein Fahrzeug, das sich in Kurven legt gemäß irgendeinem der Ansprüche 1 bis 3,
**dadurch gekennzeichnet, dass** die Unter-Scheinwerfer-Einheit (33L, 33R) an ein Fahrzeug-Komponenten-Element des Fahrzeugs montiert ist, das Fahrzeug-Komponenten-Element ist konfiguriert, um koordiniert mit einer Betätigung eiser Handgriffs, durchgeführt durch einen Fahrer, zu sein,
eine Richtung, in welcher Licht von der Unter-Scheinwerfer-Lichtquelle (33L, 33R) emittiert ist, ist in Übereinstimmung mit dem Neigungs-Winkel des Fahrzeugs und einer Betätigung, durchgeführt an dem Handgriff, geändert.

5. Ein Fahrzeug, das sich in Kurven legt gemäß irgendeinem der Ansprüche 1 bis 4,
**gekennzeichnet durch** eine Fahrzeug-Komponente, die einen Licht-Anbringungs-Abschnitt (48a) beinhaltet, an dem die Unter-Scheinwerfer-Einheit (13L, 13R) angebracht ist,
der Licht-Anbringungs-Abschnitt (48a) ist in einer Position, oberhalb und außerhalb einer Haupt-Scheinwerfer-Lichtquelle (11 H, 11 L) des Fahrzeugs, mit Bezug auf eine Breiten-Richtung des Fahrzeugs, und beabstandet von dem Fahrzeugkörper angeordnet,
die Unter-Scheinwerfer-Einheit (13L, 13R) ist an dem Licht-Anbringungs-Abschnitt (48a) montiert, so dass die Unter-Scheinwerfer-Einheit (13L, 13R) sichtbar ist, wenn von der Vorder-Seite des Fahrzeugs betrachtet.

6. Ein Fahrzeug, das sich in Kurven legt gemäß Anspruch 5, **dadurch gekennzeichnet, dass** die Fahrzeug-Komponente ein Rückspiegel (40) ist.

7. Ein Fahrzeug, das sich in Kurven legt gemäß Anspruch 5, **dadurch gekennzeichnet, dass** die Fahrzeug-Komponente ein Handgriff-Schutz (62) ist.

8. Ein Fahrzeug, das sich in Kurven legt gemäß Anspruch 5, **dadurch gekennzeichnet, dass** die Fahrzeug-Komponente ein Handgriff (12) ist.

9. Ein Verfahren zur Steuerung einer Unter-Scheinwerfer-Einheit (13L, 13R) zur Verwendung in einem Fahrzeug, das sich in Kurven legt, die Unter-Scheinwerfer-Einheit (13L, 13R) beinhaltet eine Unter-Scheinwerfer-Lichtquelle (33L, 33R), die Unter-Scheinwerfer-Einheit (13L, 13R) ist in einer Position, oberhalb und außerhalb von Haupt-Scheinwerfer-Lichtquelle (13h, 13L) des Fahrzeugs, mit Bezug auf eine Breiten-Richtung des Fahrzeugs, und beabstandet von einem Fahrzeugkörper des Fahrzeugs angeordnet,
das Verfahren umfasst:

Vorsehen eines Fahrzeugs gemäß Anspruch 1 bis 8,
Erfassen einer Variablen, verfügbar zum Erhalten eines Neigungs-Winkels des Fahrzeugs; und
Anschalten der Unter-Scheinwerfer-Lichtquelle (33L, 33R) in Übereinstimmung mit der erfassten Variablen, gemäß dem Neigungs-Winkel des Fahrzeugs, und
Ausleuchten, von einer Position beabstandet von dem Fahrzeugkörper, eines Bereichs vor und außerhalb des Fahrzeugs, mit Bezug auf die Breiten-Richtung des Fahrzeugs.

10. Ein Verfahren zur Steuerung einer Unter-Scheinwerfer-Einheit (13L, 13R) gemäß Anspruch 9, das weiterhin umfasst:

Anschalten der Unter-Scheinwerfer-Lichtquelle (33L, 33R) in Übereinstimmung mit dem Neigungs-Winkel des Fahrzeugs, das sich zu der Seite neigt, gegenüber zu der Seite an der die Unter-Scheinwerfer-Lichtquelle (33L, 33R) mit Bezug auf die Breiten-Richtung des Fahrzeugs angeordnet ist, und
Ausleuchten, von der Position beabstandet von dem Fahrzeugkörper, eines Bereichs vor und außerhalb des Fahrzeugs mit Bezug auf die Breiten-Richtung des Fahrzeugs an der gegenüberliegenden Seite.

11. Ein Verfahren zur Steuerung einer Unter-Scheinwerfer-Einheit (13L, 13R) gemäß Anspruch 9, das weiterhin umfasst:

Anschalten der Unter-Scheinwerfer-Lichtquelle (33L, 33R) in Übereinstimmung mit dem Neigungs-Winkel des Fahrzeugs, das sich zu der Seite neigt, an der die Unter-Scheinwerfer-Lichtquelle mit Bezug auf die Breiten-Richtung des Fahrzeugs angeordnet ist, und
Ausleuchten, von der Position von dem Fahrzeugkörper, eines Bereichs vor und
außerhalb des Fahrzeugs mit Bezug auf die Breiten-Richtung des Fahrzeugs an der Seite an der die Unter-Scheinwerfer-Lichtquelle (33L, 33R) angeordnet ist.

12. Ein Verfahren zur Steuerung einer Unter-Scheinwerfer-Einheit (13L, 13R) gemäß irgendeinem der Ansprüche 9 bis 11, wobei die Unter-Scheinwerfer-Einheit (13L, 13R) an einem Fahrzeug-Komponenten-Element des Fahrzeugs montiert ist, das Fahrzeug-Komponenten-Element ist konfiguriert, um mit einer Betätigung eines Handgriffs, durchgeführt durch einen Fahrer, zu koordinieren, das Verfahren umfasst: Ändern einer Richtung in welcher das Licht von der Unter-Scheinwerfer-Lichtquelle (33L, 33R) emittiert ist in Übereinstimmung mit dem Neigungs-Winkel des Fahrzeugs und einer Betätigung durchgeführt an dem Handgriff.

**Revendications**

1. Véhicule qui s'incline dans les virages comprenant :

   un phare principal (11) avec une source principale de lumière de phare (11H, 11L) ; et
   un système auxiliaire de phare avec un bloc optique auxiliaire (13L, 13R) comprenant une source de lumière de phare auxiliaire (33L, 33R),
   la source de lumière de phare auxiliaire (33L, 33R) étant configurée pour être mise en marche en fonction d'un angle d'inclinaison du véhicule et pour éclairer une zone vers l'avant et vers l'extérieur du véhicule par rapport au sens de la largeur du véhicule, où le système de phare auxiliaire comprend
   un élément de détection qui détecte une variable disponible pour obtenir l'angle d'inclinaison du véhicule ; et
   un élément de commande qui met en marche la pluralité des sources de lumière de phare auxiliaires (33L, 33R) selon l'angle d'inclinaison du véhicule obtenu sur la base d'un résultat de détection par l'élément de détection, **caractérisé en ce que**
   le bloc optique auxiliaire (13L, 13R) est disposé en une position située au-dessus et vers l'extérieur de la source principale de lumière de phare (11H, 11L) du véhicule par rapport à un sens de la largeur du véhicule et éloignée d'une carrosserie de véhicule du véhicule,
   la source de lumière de phare auxiliaire (33L, 33R) étant configurée pour être mise en marche en fonction de l'angle d'inclinaison du véhicule à éclairer, depuis la position éloignée de la carrosserie de véhicule du véhicule, la surface vers l'avant et vers l'extérieur du véhicule par rapport au sens de la largeur du véhicule.

2. Véhicule qui s'incline dans les virages selon la revendication 1, **caractérisé en ce que** la source de lumière de phare auxiliaire (33L, 33R) est configurée pour être mise en marche selon l'angle d'inclinaison du véhicule s'inclinant du côté opposé au côté où la source de lumière de phare auxiliaire (33L, 33R) est placée par rapport au sens de la largeur du véhicule et pour éclairer, depuis la position éloignée de la carrosserie de véhicule, une zone vers l'avant et vers l'extérieur du véhicule par rapport au sens de la largeur du véhicule au côté opposé.

3. Véhicule qui s'incline dans les virages selon la revendication 1, **caractérisé en ce que** la source de lumière de phare auxiliaire (33L, 33R) est configurée pour être mise en marche en fonction de l'angle d'inclinaison du véhicule s'inclinant vers le côté où la source de lumière de phare auxiliaire (33L, 33R) est placée par rapport au sens de la largeur du véhicule et pour éclairer, depuis la position éloignée de la carrosserie de véhicule, une zone vers l'avant et vers l'extérieur du véhicule par rapport au sens de la largeur du véhicule du côté où la source de lumière de phare auxiliaire (33L, 33R) est placée.

4. Véhicule qui s'incline dans les virages selon l'une quelconque des revendications 1 à 3, **caractérisé en ce que** le bloc optique auxiliaire (13L, 13R) est monté au niveau d'un élément composant de véhicule du véhicule, l'élément composant de véhicule étant configuré pour être coordonné au fonctionnement d'un guidon utilisé par un conducteur, une direction dans laquelle la lumière est émise depuis la source de lumière de phare auxiliaire (33L, 33R) est modifiée selon l'angle d'inclinaison du véhicule et d'une opération effectuée sur le guidon.

5. Véhicule qui s'incline dans les virages selon l'une quelconque des revendications 1 à 4, **caractérisé par** un composant du véhicule incluant une partie fixation de lumière (48a) à laquelle le bloc optique auxiliaire (13L, 13R) est fixé, la partie fixation de lumière (48a) est configurée dans une position située au-dessus et vers l'extérieur d'une source principale de lumière de phare (11H, 11L) du véhicule par rapport à un sens de la largeur du véhicule et éloignée de la carrosserie du véhicule,
   le bloc optique auxiliaire (13L, 13R) est monté à la partie fixation de lumière (48a) de sorte que le bloc optique auxiliaire (13L, 13R) soit visible lorsqu'observé depuis l'avant du véhicule.

6. Véhicule qui s'incline dans les virages selon la revendication 5, **caractérisé en ce que** le composant de véhicule est un rétroviseur (40).

7. Véhicule qui s'incline dans les virages selon la revendication 5, **caractérisé en ce que** le composant de véhicule est une protection de guidon (62).

8. Véhicule qui s'incline dans les virages selon la revendication 5, **caractérisé en ce que** le composant de véhicule est un guidon (12).

9. Procédé de commande d'un bloc optique auxiliaire (13L, 13R) à utiliser dans un véhicule qui s'incline dans les virages, le bloc optique auxiliaire (13L, 13R) comprenant une source de lumière de phare auxiliaire (33L, 33R), le bloc optique auxiliaire (13L, 13R) étant placé dans une position située au-dessus et vers l'extérieur de la source principale de lumière de phare (11H, 11L) du véhicule par rapport à un sens de la largeur du véhicule et éloignée d'une carrosserie de véhicule du véhicule,
le procédé comprend :

la fourniture d'un véhicule selon les revendications 1 à 8 ;
la détection d'une variable disponible pour obtenir un angle d'inclinaison du véhicule ; et
la mise en marche de la source de lumière de phare auxiliaire (33L, 33R) en fonction de la variable détectée selon l'angle d'inclinaison du véhicule, et
l'éclairage, depuis la position éloignée de la carrosserie de véhicule, d'une zone située à l'avant et vers l'extérieur du véhicule par rapport au sens de la largeur du véhicule.

10. Procédé de commande d'un bloc optique auxiliaire (13L, 13R) selon la revendication 9, comprenant en outre :

la mise en marche de la source de lumière de phare auxiliaire (33L, 33R) selon l'angle d'inclinaison du véhicule s'inclinant vers le côté opposé au côté où la source de lumière de phare auxiliaire (33L, 33R) est placée par rapport au sens de la largeur du véhicule, et l'éclairage, depuis la position éloignée de la carrosserie de véhicule, d'une zone située à l'avant et vers l'extérieur du véhicule par rapport au sens de la largeur du véhicule au côté opposé.

11. Procédé de commande d'un bloc optique auxiliaire (13L, 13R) selon la revendication 9, comprenant en outre :

la mise en marche de la source de lumière de phare auxiliaire (33L, 33R) selon l'angle d'inclinaison du véhicule s'inclinant vers le côté où la source de lumière de phare auxiliaire (33L, 33R) est placée par rapport au sens de la largeur du véhicule, et
l'éclairage, depuis la position éloignée de la carrosserie de véhicule, d'une zone située vers l'avant et vers l'extérieur du véhicule par rapport au sens de la largeur du véhicule du côté où la source de lumière de phare auxiliaire (33L, 33R) est placée.

12. Procédé de commande d'un bloc optique auxiliaire (13L, 13R) selon l'une quelconque des revendications 9 à 11, où le bloc optique auxiliaire (13L, 13R) est monté au niveau d'un élément composant de véhicule du véhicule, l'élément composant de véhicule étant configuré pour être coordonné à une opération d'un guidon exécutée par un conducteur, le procédé comprend : le changement d'un sens dans lequel de la lumière est émise depuis la source de lumière de phare auxiliaire (33L, 33R) selon l'angle d'inclinaison du véhicule et une opération exécutée sur le guidon.

MAIN HEADLIGHT 11

HIGH BEAM LIGHT SOURCE 11H

LOW BEAM LIGHT SOURCE 11L

LEFT FLASHER 14L

RIGHT FLASHER 14R

SUB HEADLIGHT LIGHT SOURCE 33L — 13L

SUB HEADLIGHT LIGHT SOURCE 33R — 13R

CONTROLLER 20

ANSWERBACK MAIN UNIT (COMMUNICATION DEVICE / CONTROL UNIT) 21

REMOTE CONTROL KEY 25

BEAM SWITCH 15B

FLASHER SWITCH 15F

LEAN ANGLE SENSOR 22

VEHICLE SPEED SENSOR 23

POWER SOURCE 26

15

10

FIG.4

(a)

FIG.5

FIG.6

FIG.7

(a)

(b)

FIG.8

## REFERENCES CITED IN THE DESCRIPTION

**Patent documents cited in the description**

- CN 1769127 A

- WO 2010061651 A